(19) Europäisches Patentamt
European Patent Office
Office européen des brevets

(11) Veröffentlichungsnummer: 0 131 757
A1

(12) # EUROPÄISCHE PATENTANMELDUNG

(21) Anmeldenummer: 84106724.2

(22) Anmeldetag: 13.06.84

(51) Int. Cl.⁴: C 09 B 31/02
//D06P1/18

(30) Priorität: 15.06.83 DE 3321518

(43) Veröffentlichungstag der Anmeldung:
23.01.85 Patentblatt 85/4

(84) Benannte Vertragsstaaten:
CH DE FR GB IT LI

(71) Anmelder: BASF Aktiengesellschaft
Carl-Bosch-Strasse 38
D-6700 Ludwigshafen(DE)

(72) Erfinder: Bergmann, Udo, Dr.
Merckstrasse 26
D-6100 Darmstadt(DE)

(72) Erfinder: Hahn, Erwin, Dr.
Am Buechsenackerhang 31
D-6900 Heidelberg(DE)

(72) Erfinder: Hansen, Guenter, Dr.
Alwin-Mittasch-Platz 8
D-6700 Ludwigshafen(DE)

(72) Erfinder: Schefczik, Ernst, Dr.
Dubliner Strasse 7
D-6700 Ludwigshafen(DE)

(54) **Isothiazoldisazofarbstoffe.**

(57) Die Erfindung betrifft Verbindungen der allgemeinen Formel I

B–N=N–A–N=N–K,

in der

B einen Isothiazolrest,

A einen weiter diazotierbaren Kupplungskomponentenrest und

K einen Kupplungskomponentenrest bedeuten.

Die erfindungsgemäßen Verbindungen eignen sich sehr gut als Farbstoffe für natürliche und synthetische Fasern.

EP 0 131 757 A1

0131757
BASF Aktiengesellschaft O.Z. 0050/36566

# Isothiazoldisazofarbstoffe

Die Erfindung betrifft Verbindungen der allgemeinen Formel I

$$B-N=N-A-N=N-K,$$

in der
B einen Isothiazolrest,
A einen weiter diazotierbaren Kupplungskomponentenrest und
K einen Kupplungskomponentenrest bedeuten.

Insbesondere betrifft die Erfindung Verbindungen der allgemeinen Formel I a

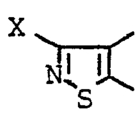 $N=N-A^1-N=N-K$,

in der
X Wasserstoff, $C_1$- bis $C_6$-Alkyl, gegebenenfalls durch Chlor, Brom, Nitro, Methyl, Ethyl, Methoxy oder Ethoxy substituiertes Benzyl, $C_3$- oder $C_4$-Alkenyl oder gegebenenfalls durch Chlor, Brom, Nitro, Methyl, Ethyl, Methoxy oder Ethoxy substituiertes Phenyl oder einen Rest der Formel

$$B^1-\underset{B^2}{N}-\overset{B^3}{C}H-CH_2- \quad ,$$

Y Wasserstoff, Chlor, Brom, Cyan, Nitro, Carbamoyl oder $C_1$- bis $C_6$-Alkoxycarbonyl,
$A^1$ gegebenenfalls durch Chlor, Brom, $C_1$- bis $C_4$-Alkyl, $C_1$- bis $C_4$-Alkoxy, Phenoxy oder Acylamino substituiertes Phenyl, gegebenenfalls durch Chlor, Brom, $C_1$- bis $C_4$-

Alkyl oder $C_1$- bis $C_4$-Alkoxy substituiertes Naphthyl, gegebenenfalls durch gegebenenfalls substituiertes Alkyl, Alkenyl, Aryl oder heterocyclische Reste substituiertes Thiazolyl oder gegebenenfalls substituiertes Thienyl und

K der Rest einer Kupplungskomponente sind, wobei

$B^1$ Allyl, gegebenenfalls substituiertes Alkyl, Cycloalkyl oder Aryl,

$B^2$ Acyl, $B^1$ und $B^2$ zusammen mit dem Stickstoff einen gesättigten Fünf- oder Sechsring oder einen Diacylimidrest und

$B^3$ Wasserstoff, $C_1$- bis $C_4$-Alkyl oder gegebenenfalls substituiertes Phenyl bedeuten.

Reste $B^3$ sind neben Wasserstoff im einzelnen z.B. Butyl, Propyl, Ethyl, Phenyl, Chlorphenyl, Methylphenyl, Methoxyphenyl oder Nitrophenyl und vorzugsweise Methyl.

Für $B^1$ kommen z.B. $C_1$- bis $C_8$-Alkyl, das noch durch Sauerstoff unterbrochen und durch $C_1$- bis $C_8$-Alkoxy, Phenoxy, Phenyl oder $C_1$- bis $C_8$-Alkanoyloxy substituiert sein kann, Cyclopentyl, Cyclohexyl, Methylcyclohexyl, Norbornyl oder gegebenenfalls durch Chlor, Methyl oder Alkoxy substituiertes Phenyl in Betracht.

Einzelne Reste $B^1$ sind neben den bereits genannten z.B.: $CH_3$, $C_2H_5$, $C_3H_7$, $C_4H_9$, $C_6H_{13}$, $C_8H_{17}$, $C_2H_5OCH_2CH_2$,

$CH_3OCH_2CH_2CH_2$, $C_4H_9OCH_2CH_2CH_2$, $CH_3CONHCH_2CH_2$, $C_2H_5OCOCH_2$,

$CH_3OCOCHCH_3$, $C_6H_5OCH_2CH_2$, $C_6H_5OCH_2CH_2OCH_2CH_2CH_2$, $C_6H_5CH_2$,

$C_6H_5CH_2CH_2$, 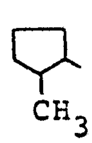 , 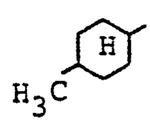 , 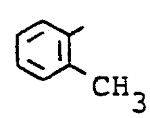 , 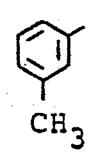 ,

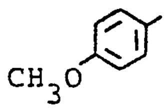 , 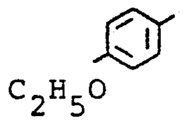 , 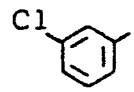 , 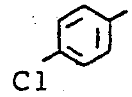

oder 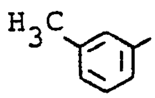 .

Bei Resten, die als Isomere auftreten können, sind sowohl die n-, i- und t-Verbindungen durch die abgekürzte Formelschreibweise erfaßt.

Für $B^2$ sind z.B. zu nennen:
$C_1$- bis $C_{10}$-Alkanoyl, das noch durch Alkoxy oder Phenoxy substituiert sein kann, Cyclohexanoyl, gegebenenfalls durch Chlor, Methyl oder Methoxy substituiertes Benzoyl, $C_1$- bis $C_8$-Alkoxycarbonyl, Aminocarbonyl, gegebenenfalls N-mono- oder N,N-disubstituiertes Aminocarbonyl oder Phenylaminocarbonyl sowie die entsprechenden Alkyl-, Aryl- oder Aminosulfonylreste.

Einzelne Acylreste $B^2$ sind beispielsweise:

CHO, $CH_3CO$, $CH_3OCH_2CO$, $CH_3-\overset{CH_3}{\underset{CH_3}{C}}-CO$, $C_3H_7CO$, $C_7H_{15}CO$, $C_9H_{19}CO$,

$C_6H_5OCH_2CO$, $C_6H_5CH_2CO$, $C_6H_5CH{=}CH-CO$,

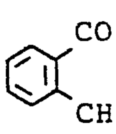 , 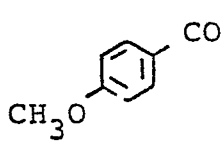 , 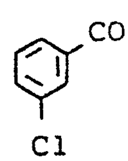 ,

$CH_3OCO$, $C_2H_5OCO$, $C_4H_9OCO$, $C_8H_{17}OCO$, $CH_3OCH_2CH_2OCO$, $CH_3NHCO$,

$C_2H_5NHCO$, $C_3H_7NHCO$, $C_4H_9NHCO$, $(CH_3)_2NCO$, $CH_3SO_2$, $C_6H_5SO_2$

oder 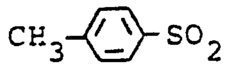 .

Für $B^1$ und $B^2$ zusammen mit dem Stickstoff sind z.B. folgende Reste zu nennen:

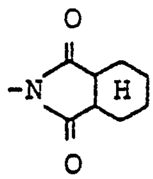 , 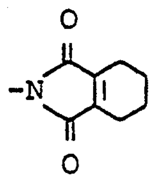 , 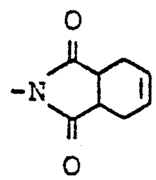 , 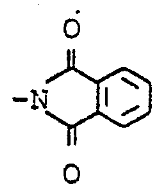 ,

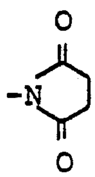 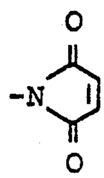 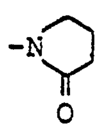 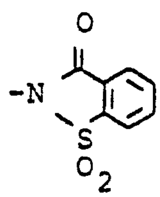 oder 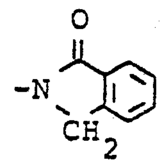 .

Bevorzugt sind für $B^1$ $C_1$- bis $C_8$-Alkyl und für $B^3$ Wasserstoff. Bevorzugte Acylreste $B^2$ sind $C_1$- bis $C_4$-Alkanoyl oder Benzoyl.

Einzelne Alkyl- und Alkenyl-Reste X sind z. B. Butyl, Amyl, Hexyl, insbesondere n- oder i-Propyl oder Ethyl und vorzugsweise Methyl sowie Allyl und Methallyl.

Alkoxycarbonylreste für Y sind z. B. Propoxy-, Butoxy-, Amyloxy- oder Hexoxycarbonyl und vorzugsweise Methoxy- oder Ethoxycarbonyl.

Bevorzugt als Alkyl- und Alkoxygruppen für die Phenyl- und Naphthylreste A sind Methyl, Methoxy oder Ethoxy. Acylaminoreste für A sind z. B. NHCOH, $NHCOCH_3$, $NHCOC_2H_5$, $NHCOC_4H_9$, $NHCOCH_2OCH_3$, $NHCOCH_2-OC_6H_5$, $NHCOC_6H_5$, $NHCONH_2$, $NHCONHCH_3$, $NHCONHC_4H_9$, $NHSO_2CH_3$ oder $NHSO_2N(CH_3)_2$.

Die Thiazolylreste A entsprechen der Formel

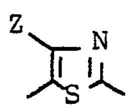 ,

in der

Z Wasserstoff, gegebenenfalls durch Halogen, Cyan, Hydroxy, $C_1$- bis $C_4$-Alkoxy, Benzyloxy, Phenoxy, $C_1$- bis $C_4$-Alkylcarbonyloxy, das gegebenenfalls nochmals durch einen Oxycarbonylrest substituiert sein kann, Oxycarbonyl, $C_1$- bis $C_4$-Alkoxycarbonyl, $C_1$- bis $C_4$-Alkoxycarbonyloxy, Carbamoyl, Oxalyl, Phthaloyl, Phenylaminocarbonyloxy, $C_1$- bis $C_4$-Alkylaminocarbonyloxy, Phenoxycarbonyloxy, Phenylcarbonyloxy substituiertes $C_1$- bis $C_4$-Alkyl, Allyl, Methallyl, gegebenenfalls durch Phenyl, $C_1$- bis $C_4$-Alkyl, Nitro, Halogen oder $C_1$- bis $C_4$-Alkoxy weitersubstituiertes Phenyl oder Naphthyl oder gegebenenfalls durch $C_1$- bis $C_4$-Alkyl, $C_1$- bis $C_4$-Alkoxy, Halogen oder Cyan im Phenylring substituiertes Benzyl oder Phenethyl bedeutet.

Als Beispiele solcher Reste Z seien im einzelnen genannt: Methyl, Ethyl, Propyl, Butyl, Methoxymethyl, ß-Ethoxyethyl, ß-Hydroxyethyl, ß-Cyanethyl, ß-Chlorethyl, ß-Phenoxyethyl, ß-Benzyloxyethyl, ß-Acetoxyethyl, ß-Propionyloxethyl, ß-Ethoxycarbonyloxethyl, ß-Phenoxycarbonyloxyethyl, ß-Ethoxycarbonyl-ethyl, ß-Butoxycarbonyl-ethyl, ß-Aminocarbonylethyl, ß-(Diethylaminocarbonyl)-ethyl, ß-(Methylaminocarbonyloxy)-ethyl, ß-(Phenylaminocarbonyloxy)-ethyl, ß-Oxycarbonyl-ethyl, ß-Oxalylethyl, ß-Phthalethyl, Phenyl, 1- oder 2-Naphthyl, p-Biphenyl, 4-Chlorphenyl, 2,4-Dichlorphenyl, 4-Ethoxyphenyl, o-, m- oder p-Tolyl, 4-Nitrophenyl, 4-Ethylphenyl, Benzyl, 2-Phenylethyl, p-Methylbenzyl, p-Methoxybenzyl, 2,4-Dichlorbenzyl, 4-Cyanbenzyl oder p-Bromphenylethyl.

Thienylreste A entsprechen der Formel

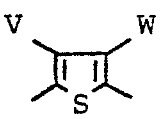 ,

in der

V Wasserstoff, gegebenenfalls substituiertes $C_1$- bis $C_6$-Alkyl, $C_1$- bis $C_6$-Alkoxycarbonyl oder durch Chlor, Brom, Nitro, Methyl, Ethyl, Methoxy oder Ethoxy substituiertes Phenyl und

W Nitro, Cyan, Carbamoyl, $C_1$- bis $C_6$-Alkoxycarbonyl oder $C_1$- bis $C_6$-Alkoxy-$C_1$- bis $C_4$-alkoxycarbonyl bedeuten.

Die Kupplungskomponenten K entsprechen z. B. den allgemeinen Formeln

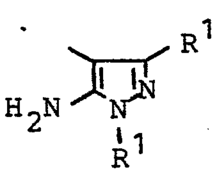 , 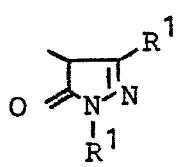 , 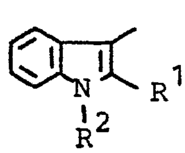 ,

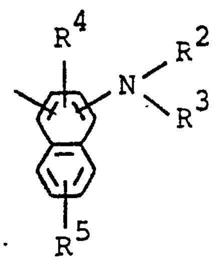 , 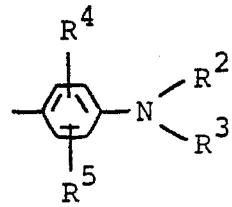 , 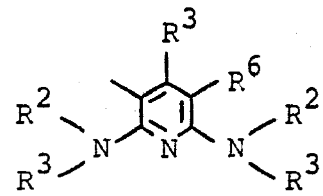 oder

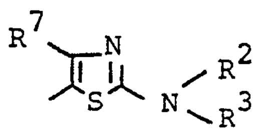

wobei

$R^1$ Wasserstoff, Alkyl, Aralkyl oder Aryl,

$R^2$ Wasserstoff oder $R^3$,

$R^3$ gegebenenfalls substituiertes Alkyl, Cycloalkyl, Alkenyl, Aralkyl oder Aryl,

$R^4$, $R^5$ Wasserstoff Alkyl, Alkoxy, Phenoxy, Halogen, Alkylsulfonylamino, Dialkylaminosulfonylamino oder Acylamino,

$R^6$ Cyan, Carbamoyl, Nitro oder Carbalkoxy und

$R^7$ gegebenenfalls substituiertes Phenyl, Alkyl oder Aralkyl sind.

Einzelne Reste $R^1$ sind neben den bereits genannten beispielsweise Methyl, Ethyl, Propyl, Butyl, Benzyl, Phenethyl, Phenyl, o-, m-, p-Tolyl oder o-, m-, p-Chlorphenyl.

Reste $R^3$ sind neben den bereits genannten z. B. $C_1$- bis $C_6$-Alkylgruppen, die durch Chlor, Brom, Hydroxy, $C_1$- bis $C_8$-Alkoxy, Phenoxy, Cyan, Carboxy, $C_1$- bis $C_8$-Alkanoyloxy, $C_1$- bis $C_8$-Alkoxy-$C_1$-$C_4$-alkoxy, Benzoyloxy, o-, m-, p-Methylbenzoyloxy, o-, m-, p-Chlorbenzoyloxy, $C_1$- bis $C_8$-Alkoxyalkanoyloxy, Phenoxyalkanoyloxy, $C_1$- bis $C_8$-Alkoxycarbonyloxy, $C_1$- bis $C_8$-Alkoxyalkoxycarbonyloxy, Benzyloxycarbonyloxy, Phenethyloxycarbonyloxy, Phenoxyethoxycarbonyloxy, $C_1$- bis $C_8$-Alkylaminocarbonyloxy, Cyclohexyl-

aminocarbonyloxy, Phenylaminocarbonyloxy, $C_1$- bis $C_8$-Alkoxycarbonyl, $C_1$- bis $C_8$-Alkoxyalkoxycarbonyl, Phenoxycarbonyl, Benzyloxycarbonyl, Phenoxy-$C_1$-$C_4$-alkoxy oder Phenethyloxycarbonyl substituiert sein können sowie Phenyl, Benzyl, Phenylethyl oder Cyclohexyl.

Einzelne Reste $R^3$ sind z. B. Methyl, Ethyl, Propyl, Butyl, Pentyl, Hexyl, Allyl, Methallyl, 2-Chlorethyl, 2-Bromethyl, 2-Cyanethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-ß-Phenylethoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl, 2-Phenoxyethoxycarbonylethyl oder 2-Benzoylethyl.

Als Reste $R^4$ und $R^5$ kommen beispielsweise Wasserstoff, Methyl, Ethyl, Propyl, Brom, Chlor, Methoxy, Ethoxy, Phenoxy, Benzyloxy, $C_1$- bis $C_6$-Alkanoylamino, Benzoylamino

sowie $C_1$- bis $C_4$-Alkylsulfonylamino oder -Dialkylaminosulfonylamino in Betracht.

Reste $R^6$ sind neben den bereits genannten z. B. Aminocarbonyl, Methylaminocarbonyl, Dimethylaminocarbonyl, Ethylaminocarbonyl, Diethylaminocarbonyl, Methoxycarbonyl, Ethoxycarbonyl, n- und i-Propoxycarbonyl, n-, i- und sek.-Butoxycarbonyl, Methoxyethoxycarbonyl, Ethoxyethoxycarbonyl, n- und i-Propoxyethoxycarbonyl oder n-, i- und sek.-Butoxyethoxycarbonyl.

Reste $R^7$ sind beispielsweise durch $C_1$- bis $C_{10}$-Alkyl, $C_1$- bis $C_{10}$-Alkoxy, Phenoxy, Benzyloxy, Phenyl, Chlor, Brom, Nitro, $C_1$- bis $C_4$-Alkoxycarbonyl, $C_1$- bis $C_4$-Mono- oder Dialkylamino, $C_1$- bis $C_4$-Alkoxy-ethoxy, $C_1$- bis $C_4$-Alkyl- oder Phenylmercapto, $C_1$- bis $C_5$-Alkanoylamino, wie Acetylamino, Propionylamino, Butyrylamino oder Valerylamino, ein- oder mehrfach substituiertes Phenyl, $C_1$- bis $C_4$-Alkyl, $C_1$- bis $C_4$-Alkoxycarbonylmethyl, Cyanmethyl oder Benzyl.

Zur Herstellung der Verbindungen der Formel I kann man eine Diazoniumverbindung von Aminen der Formel II

$$B-N=N-A-NH_2$$

mit Kupplungskomponenten der Formel

$$H-K$$

in an sich bekannter Weise umsetzen. Die Verbindungen der Formel II sind wiederum durch Umsetzung einer Diazoniumverbindung von Aminen der Formel

$$B-NH_2$$

mit Kupplungskomponenten der Formel

$$HA-NH_2$$

ebenfalls in bekannter Weise zugänglich.

Einzelheiten der Umsetzungen können den Beispielen entnommen werden, in denen sich Angaben über Teile und Prozente, sofern nicht anders vermerkt, auf das Gewicht beziehen.

Die Verbindungen der Formel I sind rot bis blau und eignen sich zum Färben von natürlichen und synthetischen Fasern, insbesondere von Polyestern und Baumwolle und Mischgeweben aus beiden. Für die Mischgewebe eignet sich z. B. das aus der DE-PS 18 11 796 bekannte Verfahren. Die mit den Farbstoffen hergestellten Färbungen zeichnen sich im allgemeinen durch gute Echtheiten aus.

Von besonderer Bedeutung sind Verbindungen der Formel

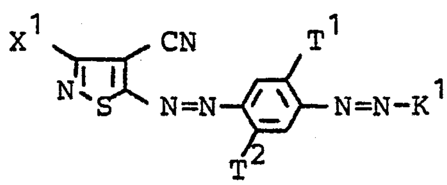 ,

in der

$X^1$ $C_1$- bis $C_4$-Alkyl, Allyl, gegebenenfalls durch Chlor, Brom, Methyl, Ethyl, Methoxy oder Ethoxy substituiertes Benzyl oder gegebenenfalls durch Chlor, Brom, Methyl, Ethyl, Methoxy oder Ethoxy substituiertes Phenyl,

$T^1$ Wasserstoff, Chlor, Methyl, Ethyl, Methoxy oder Ethoxy,

$T^2$ Wasserstoff, Chlor, Methyl, Ethyl, Methoxy, Ethoxy, $C_1$- bis $C_4$-Alkanoylamino, Benzoylamino oder $C_1$- bis $C_4$-Alkylsulfonylamino und

$K^1$ ein Rest einer Kupplungskomponente der Anilin-, Thiazol- oder Pyridinreihe sind.

Beispiel 1

a) 13,9 Teile 5-Amino-4-cyan-3-methylisothiazol wurden in 120 Raumteilen Ameisensäure unter Zugabe von 8 Raumteilen 85 %iger Schwefelsäure gelöst. Bei 0 - 5 °C ließ man unter Rühren langsam 32 Teile Nitrosylschwefelsäure (11,5 % $N_2O_3$) zulaufen und rührte 4 Stunden bei gleicher Temperatur nach. Die erhaltene Diazoniumsalzlösung ließ man in eine Lösung von 13,7 Teilen 2-Methoxy-5-methylanilin in 40 Raumteilen N,N-Dimethylformamid, 400 Teilen Wasser und 40 Raumteilen 32 proz. Salzsäure unter Zugabe von 500 Teilen Eis langsam bei 0 - 5 °C einfließen. Nach Beendigung der Kupplung wurde die Farbstoffsuspension auf 60 °C erhitzt, der Farbstoff abgesaugt, neutral gewaschen und bei 50 °C im Vakuum getrocknet. Man erhielt 28,7 Teile des Farbstoffs der Formel

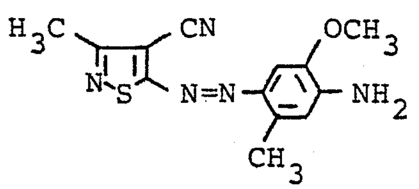 .

b) 28,7 Teile des nach Beispiel 1 a) erhaltenen Farbstoffs wurden in einer Mischung aus 400 Raumteilen Eisessig und 60 Raumteilen 5N Salzsäure nach Zusatz von 4 Teilen einer 60 proz. wäßrigen Paste von Diisobutylnaphthalin-1-sulfonsäure dispergiert. Nach Zugabe von 300 Teilen Eis wurden bei 0 - 5 °C 30 Raumteile einer 3,33 N Natriumnitritlösung eingetropft und der Ansatz ca.

2 Stunden bis zur vollständigen Diazotierung gerührt. Zur Diazosuspension wurden anschließend 26,5 Teile N,N-Bis-(ß-acetoxethyl)-m-toluidin, vorgelöst in 100 Raumteilen Eisessig, zugegeben, der Ansatz mit einer Mischung von Wasser und Eis auf 3000 Raumteile verdünnt und bei Raumtemperatur 16 Stunden gerührt. Anschließend wurde der Farbstoff abgesaugt, mit Warmwasser (40 °C) neutral gewaschen und bei 50 °C im Vakuum getrocknet. Man erhielt 45 Teile des Farbstoffs der Formel

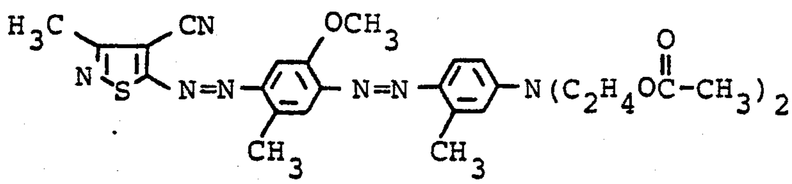

,

der auf Polyester blaue Färbungen mit guten Echtheiten ergibt.

## Beispiel 2

28,7 Teile des in Beispiel 1 a) beschriebenen Farbstoffs wurden wie in Beispiel 1 b) angegeben diazotiert. Anschließend wurde die Diazosuspension bei 0 - 5 °C in eine Mischung von 18,8 Teilen N-ß-Cyanethyl-N-ethyl-m-toluidin in 300 Raumteilen Eisessig und 1500 Teilen Eis eingetragen. Der Ansatz wurde mit Wasser und Eis auf 3000 Raumteile verdünnt und 16 Stunden nachgerührt. Der Farbstoff wurde abgesaugt, neutral gewaschen und im Vakuum bei 50 °C getrocknet. Es wurden 42 Teile des Farbstoffs der Formel

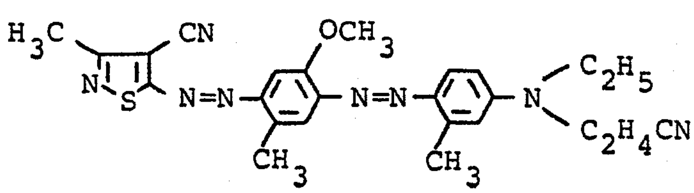

erhalten, mit dem auf Polyester-Baumwoll-Mischgewebe marineblaue Färbungen mit guten Echtheiten erhalten werden.

Beispiel 3

13,9 Teile 5-Amino-4-cyan-3-methylisothiazol wurden wie in Beispiel 1 a) beschrieben diazotiert und die Diazolösung bei 0 - 5 °C in eine Lösung von 15,3 Teilen 2,5-Dimethoxyanilin in 40 Raumteilen N,N-Dimethylformamid, 400 Teilen Wasser, 40 Raumteilen 32 proz. Salzsäure und 500 Teilen Eis eingetropft. Nach Ende der Kupplung wurde der Monoazofarbstoff der Formel

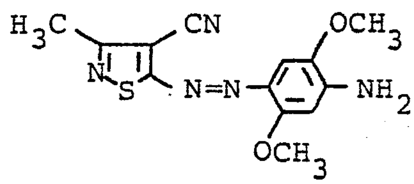

abgesaugt, mit Wasser neutral gewaschen und im Vakuum bei 50 °C getrocknet. Man erhielt 30 Teile Farbstoff, der in einer Mischung aus 400 Raumteilen Eisessig, 60 Raumteilen 5N Salzsäure und 4 Teilen 60 proz. Diisobutylnaphthalin-1-sulfonsäure suspendiert wurde. Nach Zugabe von 300 Teilen Eis wurden bei 0 - 5 °C 30 Raumteile einer 3,33 N Natriumnitritlösung hinzugefügt und 2 Stunden nachgerührt. Anschließend wurde die Diazosuspension in eine Mischung von 17,4 Teilen N-ß-Cyanethyl-ethylanilin in 100 Raumteilen Eisessig und 500 Teilen Eis eingerührt und der Ansatz mit Eis und Wasser auf 2500 Raumteile verdünnt. Nach 2 Stunden wurde der Farbstoff abgesaugt, mit Wasser neutral gewaschen und im Vakuum bei 50 °C getrocknet. Die Ausbeute betrug 35 Teile des Farbstoffs der Formel

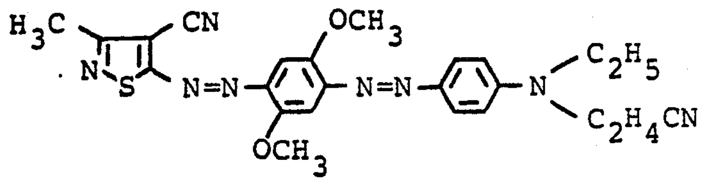

Auf Polyester erhält man blaue Färbungen mit guten Echtheiten.

Beispiel 4

a) 21,5 Teile 5-Amino-3-benzyl-4-cyan-isothiazol wurden in 150 Teilen Eisessig/Propionsäure (3 : 1) und 70 Teilen 85 %iger Schwefelsäure gelöst, bei 0 - 5 °C langsam mit 32 Teilen Nitrosylschwefelsäure (ca. 11,5 % $N_2O_3$) versetzt und 4 Stunden bei 0 - 5 °C nachgerührt. Die erhaltene Diazolösung ließ man in eine Lösung von 13,7 Teilen 2-Methoxy-5-methylanilin in 40 Raumteilen N,N-Dimethylformamid, 400 Teilen Wasser und 40 Raumteilen 32 proz. Salzsäure unter Zugabe von 500 Teilen Eis langsam bei 0 - 5 °C einfließen. Anschließend wurde der Ansatz mit Wasser auf 2 l verdünnt, 2 Stunden nachgerührt, auf 60 °C erhitzt und filtriert. Neutralwaschen mit Wasser und Trocknen im Vakuum bei 60 °C liefert 29 Teile des Farbstoffs der Formel

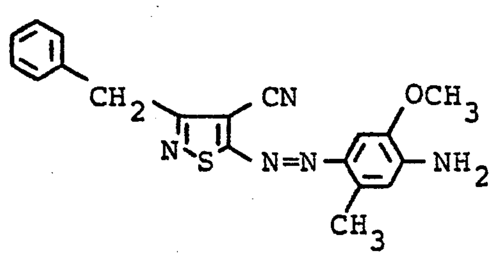

b) 29 Teile des nach Beispiel 4 a) erhaltenen Farbstoffs wurden in einer Mischung aus 300 Raumteilen Eisessig, 150 Teilen Eis und 2 Teilen einer 60 proz. wäßrigen Paste von Diisobutylnaphthalin-1-sulfonsäure suspendiert und mit 25 Raumteilen einer 3,33 N Natriumnitritlösung versetzt. Bei 0 - 5 °C wurden danach 45 Raumteile 5N Salzsäure zugetropft und 2 Stunden gerührt. Zur Diazosuspension wurden 21,2 Teile N,N-Bis-(ß-acetoxethyl)-m-toluidin, vorgelöst in 100 Raumteilen Eisessig, zugegeben und der Ansatz mit ca. 1000 Teilen Wasser verdünnt. Die Suspension wurde auf 65 °C erhitzt, filtriert und mit Wasser neutral gewaschen. Man erhielt 41,5 Teile des Farbstoffs der Formel

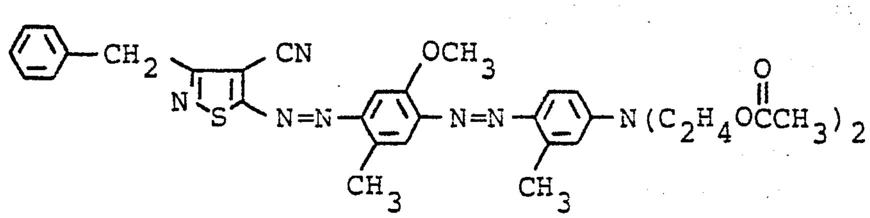,

der auf Polyester marineblaue Färbungen mit guten Echtheiten ergibt.

Beispiel 5

20,1 Teile 5-Amino-4-cyan-3-phenyl-isothiazol wurden in einem Gemisch aus 150 Raumteilen Eisessig/Propionsäure (Volumenverhältnis 17 : 3) und 40 Raumteilen 85 %iger Schwefelsäure bei 0 - 5 °C unter Rühren langsam mit 32 Teilen Nitrosylschwefelsäure (11,5 % $N_2O_3$) versetzt. Man ließ 4 Stunden bei dieser Temperatur nachrühren und setzte die Diazolösung analog Beispiel 4 a) mit 13,7 Teilen 2-Methoxy-5-methylanilin zu 27 Teilen des Farbstoffs der Formel

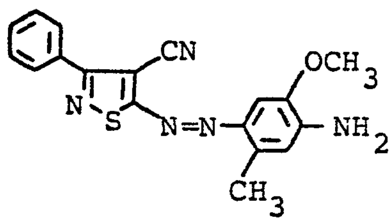

um. Der Farbstoff wurde wie in Beipsiel 4 b) mit 25 Teilen einer 3,33 N Natriumnitritlösung diazotiert und die Diazosuspension bei 0 - 5 °C zu einer Mischung von 14,6 Teilen N-ß-Cyanethyl-N-ethyl-m-toluidin in 300 Raumteilen Eisessig und 500 Teilen Eis getropft. Der Ansatz wurde mit 1000 Teilen Wasser verdünnt, der Farbstoff bei 60 °C abfiltriert, mit Wasser neutral gewaschen und bei 60 °C im Vakuum getrocknet. Die Ausbeute betrug 37 Teile der Farbstoffs der Formel

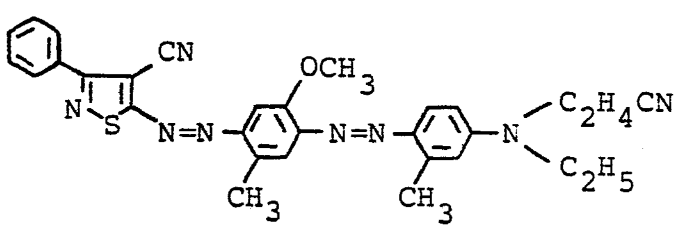 ,

mit dem auf Polyester-Baumwoll-Mischgewebe marineblaue Färbungen mit guten Echtheiten erhalten werden.

Analog erhält man auch die folgenden Farbstoffe:

| Bsp. Nr. | | Substrat | Nuance |
|---|---|---|---|
| 6 | 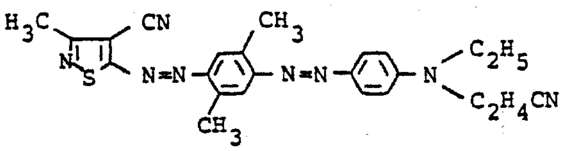 | PES | blau-violett |
| 7 | 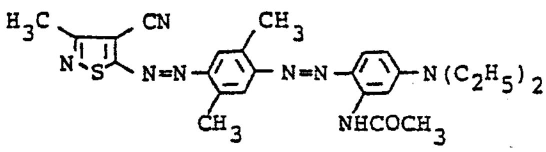 | PES | blau |
| 8 | 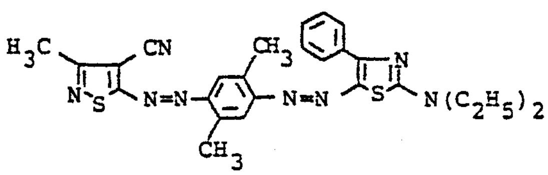 | PES | blau |
| 9 | 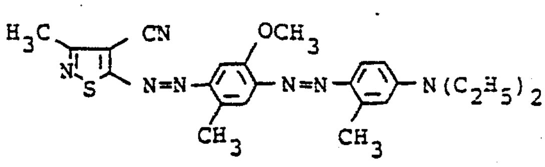 | PES/BW | blau |
| 10 | 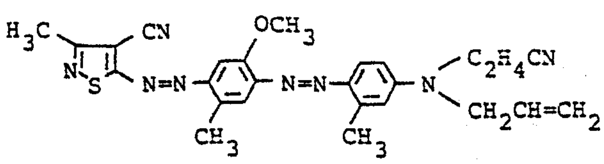 | PES/BW | marineblau |
| 11 | 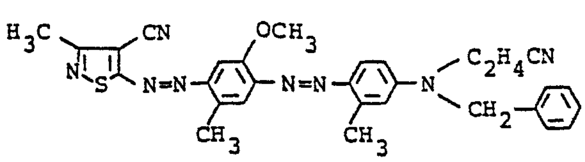 | PES/BW | marineblau |

| Bsp. Nr. | | Substrat | Nuance |
|---|---|---|---|
| 12 | 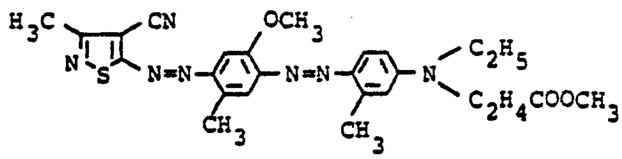 | PES | marineblau |
| 13 | 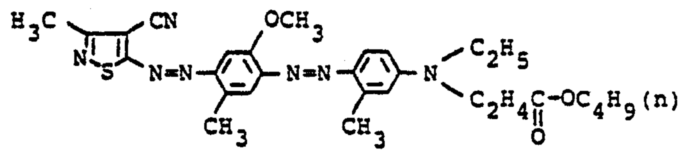 | PES | marineblau |
| 14 | 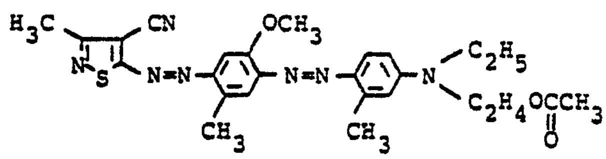 | PES | blau |
| 15 | 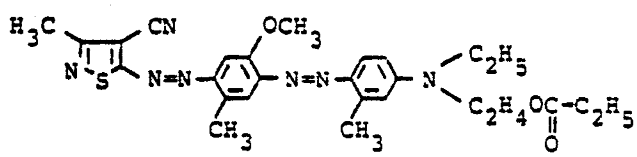 | PES | blau |
| 16 | 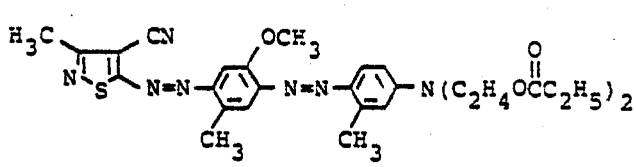 | PES | blau |
| 17 | 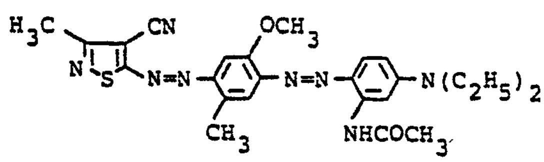 | PES/BW | graublau |

| Bsp. Nr. | | Substrat | Nuance |
|---|---|---|---|
| 18 | 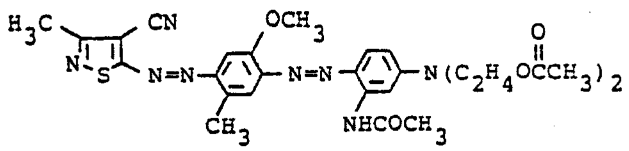 | PES | blau |
| 19 | 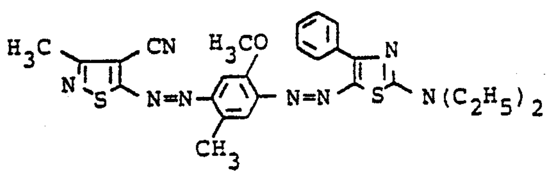 | PES/BW | blau |
| 20 | 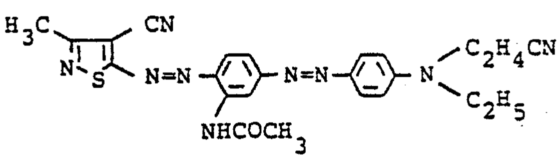 | PES | blau |
| 21 | 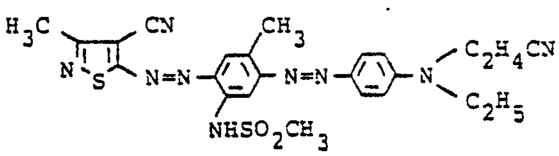 | PES/BW | blau |
| 22 | 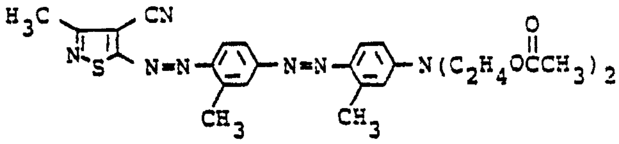 | PES | marineblau |
| 23 | 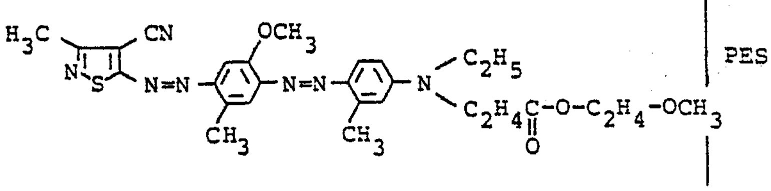 | PES | marineblau |

| Bsp. Nr. | | Substrat | Nuance |
|---|---|---|---|
| 24 | 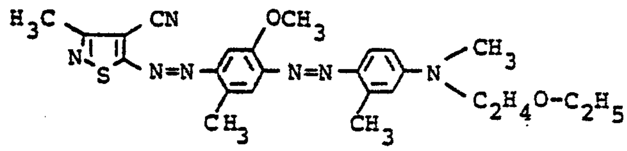 | PES | marineblau |
| 25 | 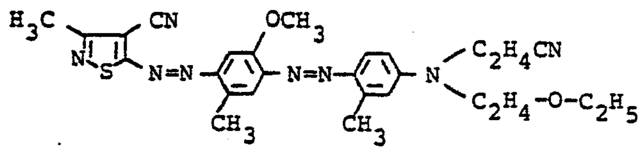 | PES/BW | marineblau |
| 26 | 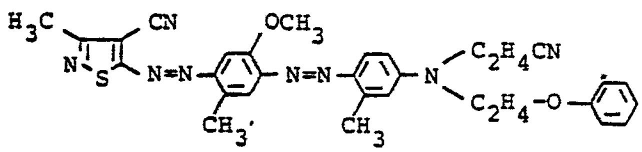 | PES/BW | marineblau |
| 27 | 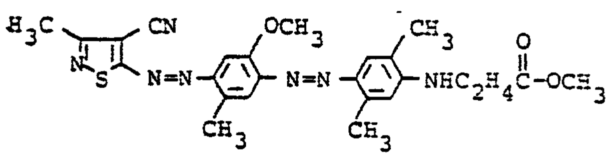 | PES | marineblau |
| 28 | 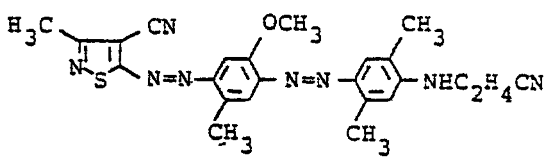 | PES | blau |
| 29 | 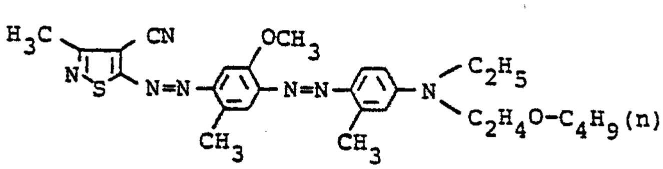 | PES | marineblau |

| Bsp. Nr. | | Substrat | Nuance |
|---|---|---|---|
| 30 | 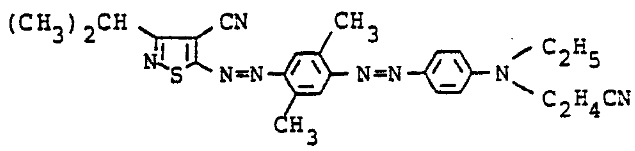 | PES | blau-violett |
| 31 | 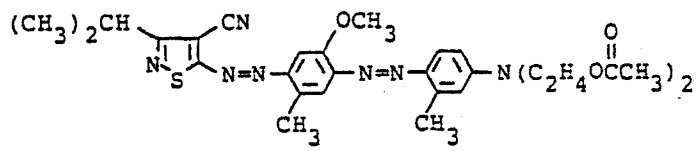 | PES | marineblau |
| 32 | 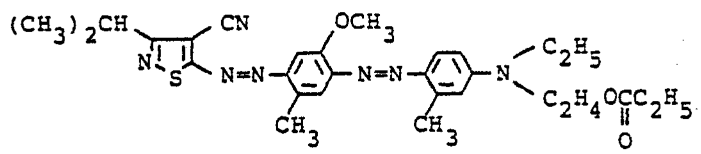 | PES | marineblau |
| 33 | 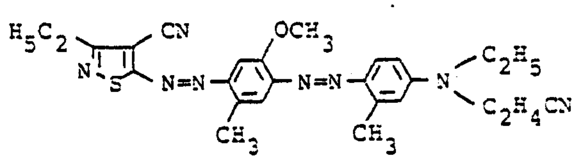 | PES/BW | marineblau |
| 34 | 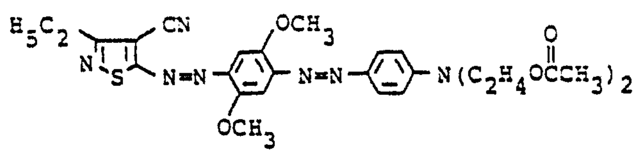 | PES | blau |
| 35 | 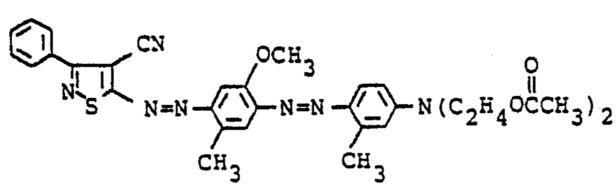 | PES | blau |

| Bsp. Nr. | | Substrat | Nuance |
|---|---|---|---|
| 36 | 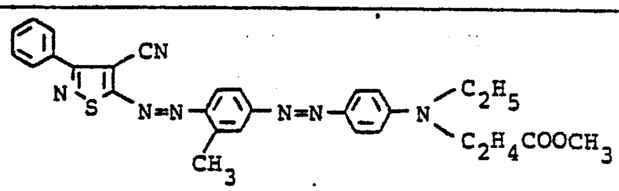 | PES | blau |
| 37 | 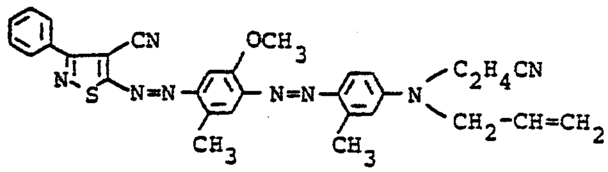 | PES/BW | marineblau |
| 38 | 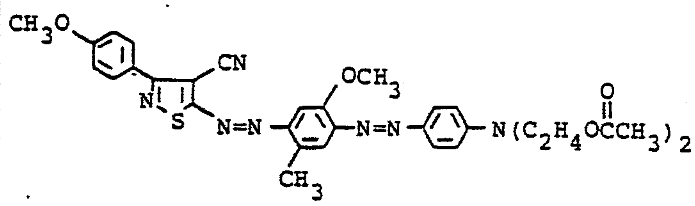 | PES | marineblau |
| 39 | 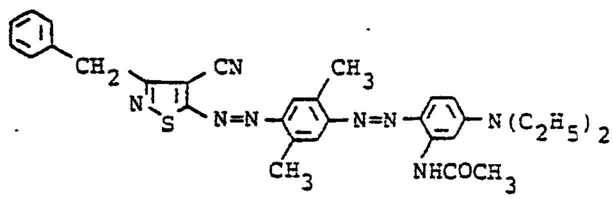 | PES/BW | blau |
| 40 | 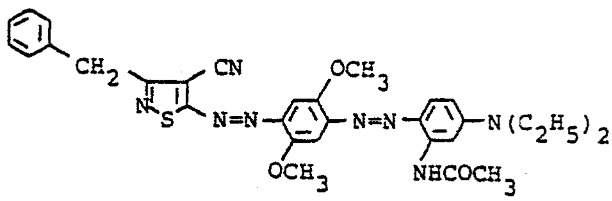 | PES/BW | blau |
| 41 | 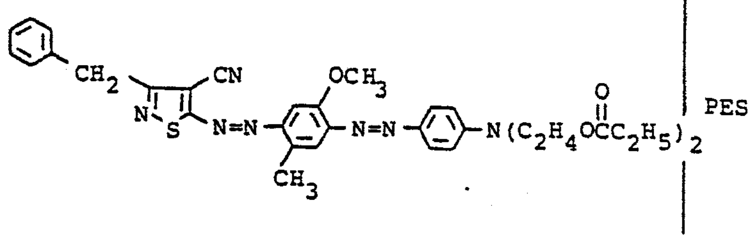 | PES | marineblau |

| Bsp. Nr. | | Substrat | Nuance |
|---|---|---|---|
| 42 | 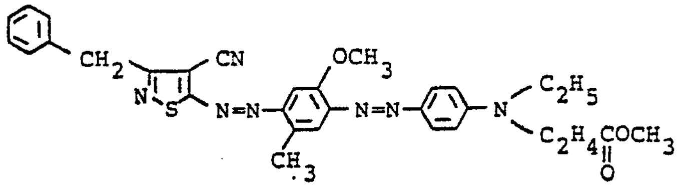 | PES | marineblau |
| 43 | 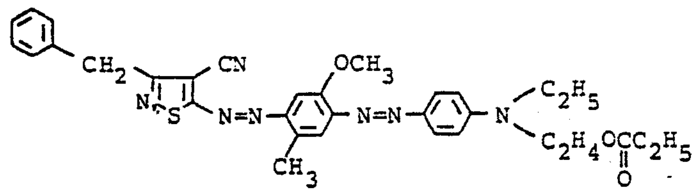 | PES | marineblau |
| 44 | 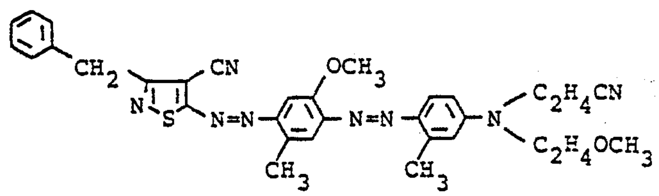 | PES | blau |
| 45 | 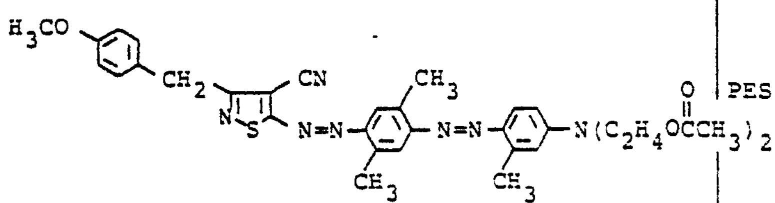 | PES | blau-violett |
| 46 | 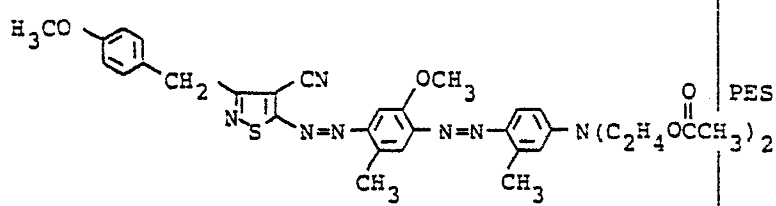 | PES | marineblau |
| 47 | 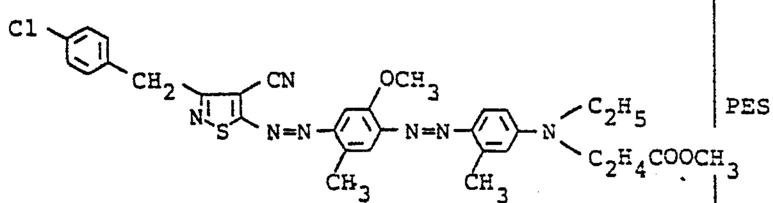 | PES | blau |

| Bsp. Nr. | | Substrat | Nuance |
|---|---|---|---|
| 48 | 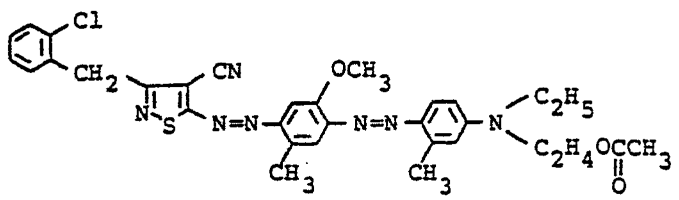 | PES | blau |
| 49 | 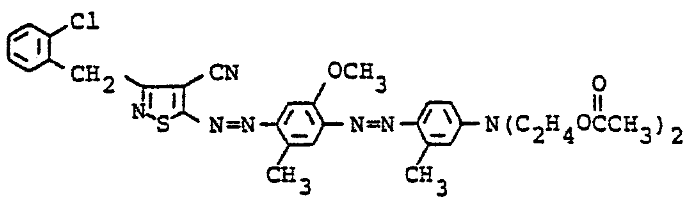 | PES | blau |
| 50 | 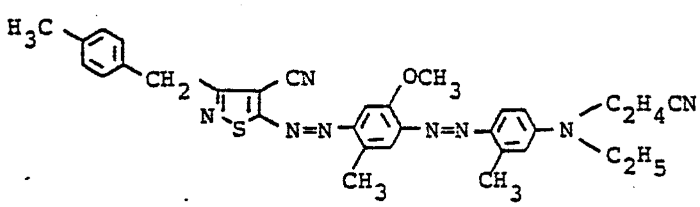 | PES | marineblau |
| 51 | 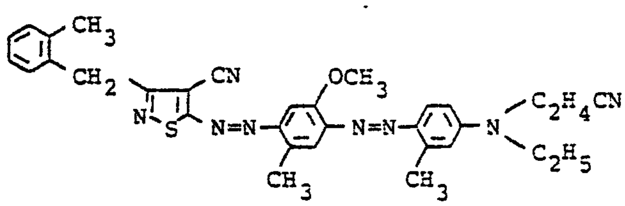 | PES | marineblau |
| 52 | 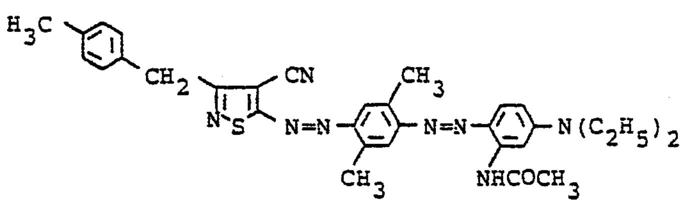 | PES | blau |
| 53 | 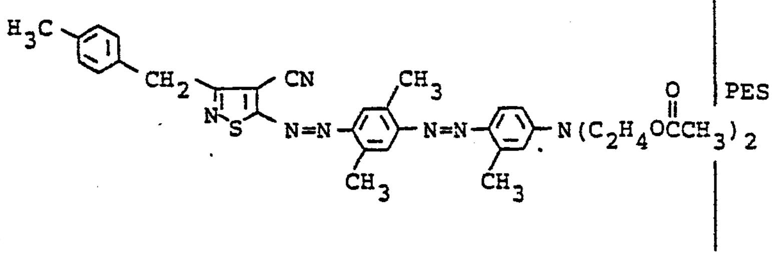 | PES | blau |

| Bsp. Nr. | | Substrat | Nuance |
|---|---|---|---|
| 54 | 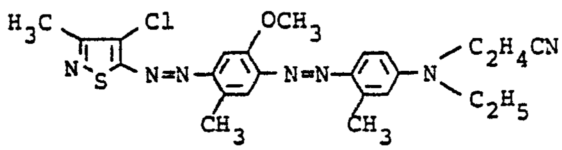 | PES | blau-violett |
| 55 | 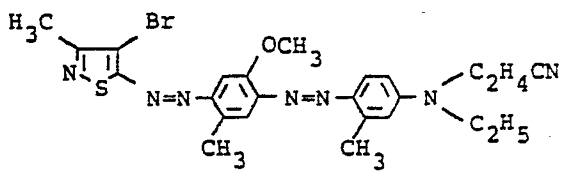 | PES | blau-violett |
| 56 | 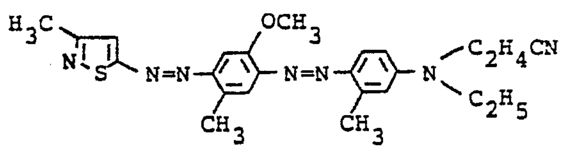 | PES | violett |
| 57 | 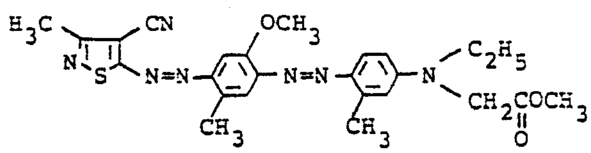 | PES | marineblau |

| Bsp. | | Substrat | Nuance |
|---|---|---|---|
| 58 | 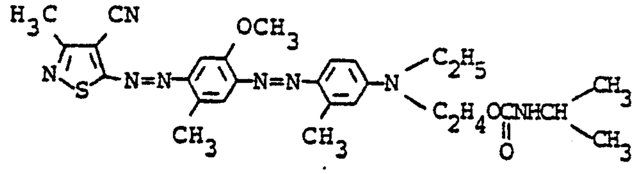 | PES | marine-blau |
| 59 | 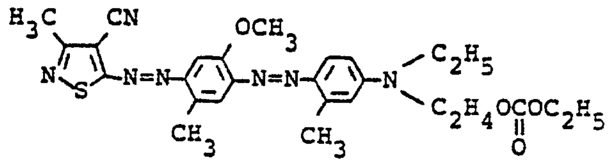 | PES | marine-blau |
| 60 | 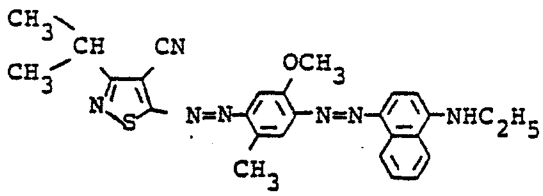 | PES | marine-blau |
| 61 | 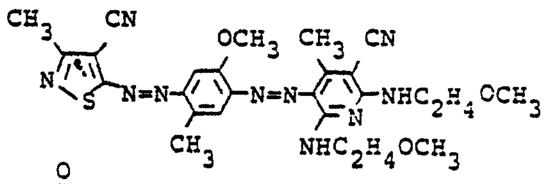 | PES | blau-violett |
| 62 | 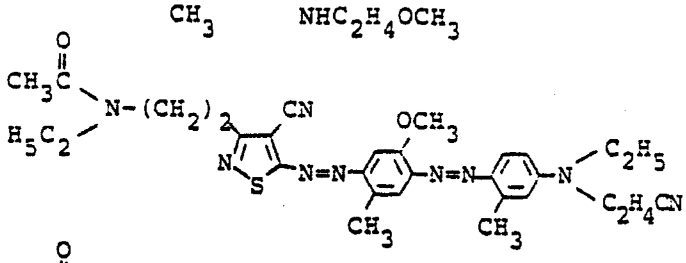 | PES/BW | marine-blau |
| 63 | 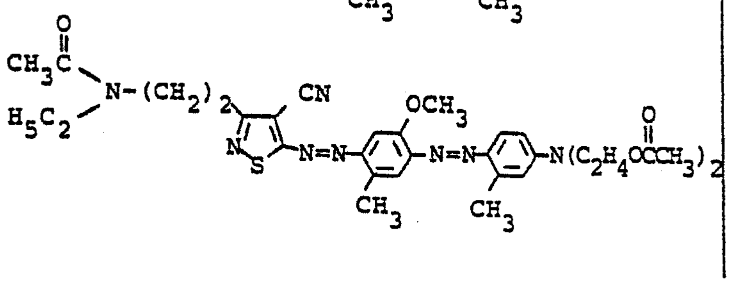 | PES | marine-blau |

| Bsp. | | Substrat | Nuance |
|---|---|---|---|
| 64 | 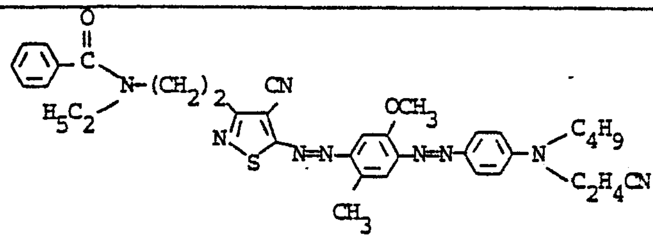 | PES/BW | marine-blau |
| 65 | 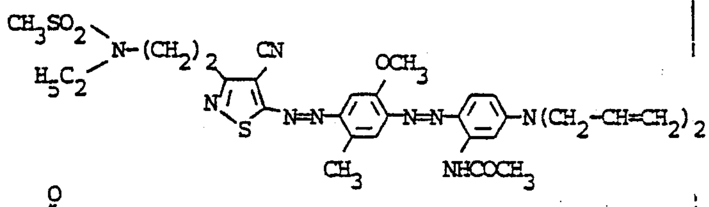 | PES/BW | blau |
| 66 | 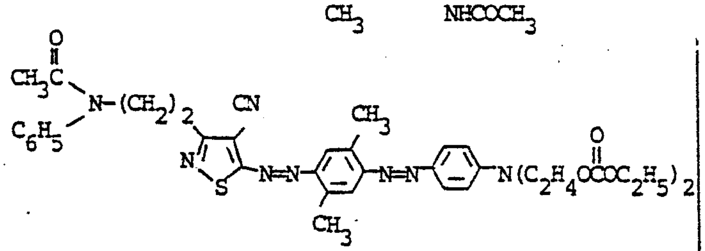 | PES/BW | blau-violett |
| 67 | 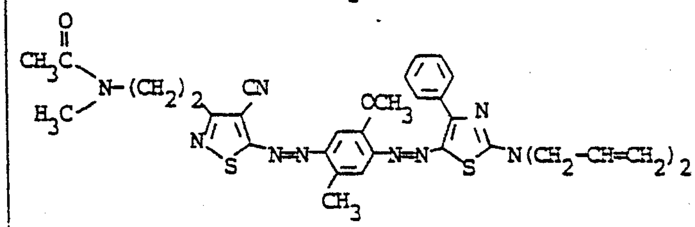 | PES/BW | marine-blau |
| 68 | 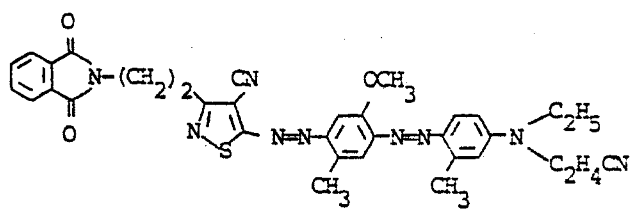 | PES/BW | marine-blau |

## Patentansprüche

1. Verbindungen der allgemeinen Formel I

B-N=N-A-N=N-K,

in der
B einen Isothiazolrest,
A einen weiter diazotierbaren Kupplungskomponentenrest und
K einen Kupplungskomponentenrest bedeuten.

2. Verbindungen der allgemeinen Formel I a

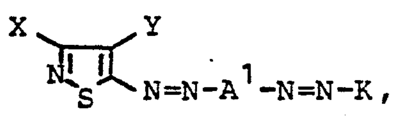

in der
X Wasserstoff, $C_1$- bis $C_6$-Alkyl, gegebenenfalls durch Chlor, Brom, Nitro, Methyl, Ethyl, Methoxy oder Ethoxy substituiertes Benzyl, $C_3$- oder $C_4$-Alkenyl, gegebenenfalls durch Chlor, Brom, Nitro, Methyl, Ethyl, Methoxy oder Ethoxy substituiertes Phenyl oder einen Rest der Formel

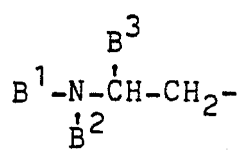

Y Wasserstoff, Chlor, Brom, Cyan, Nitro, Carbamoyl oder $C_1$- bis $C_6$-Alkoxycarbonyl,
$A^1$ gegebenenfalls durch Chlor, Brom, $C_1$- bis $C_4$-Alkyl, $C_1$- bis $C_4$-Alkoxy, Phenoxy oder Acylamino substituiertes Phenyl, gegebenenfalls durch Chlor, Brom, $C_1$- bis $C_4$-

Alkyl oder $C_1$- bis $C_4$-Alkoxy substituiertes Naphthyl, gegebenenfalls durch gegebenenfalls substituiertes Alkyl, Alkenyl, Aryl oder heterocyclische Reste substituiertes Thiazolyl oder gegebenenfalls substituiertes Thienyl und

K der Rest einer Kupplungskomponente sind, wobei

$B^1$ Allyl, gegebenenfalls substituiertes Alkyl, Cycloalkyl oder Aryl,

$B^2$ Acyl, $B^1$ und $B^2$ zusammen mit dem Stickstoff einen gesättigten Fünf- oder Sechsring oder einen Diacylimidrest und

$B^3$ Wasserstoff, $C_1$- bis $C_4$-Alkyl oder gegebenenfalls substituiertes Phenyl bedeuten.

3. Verbindungen der Formel

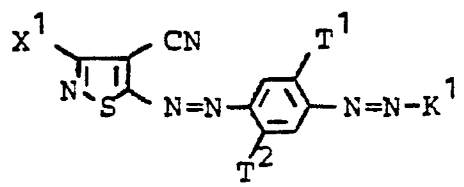

,

in der

$X^1$ $C_1$- bis $C_4$-Alkyl, Allyl, gegebenenfalls durch Chlor, Brom, Methyl, Ethyl, Methoxy oder Ethoxy substituiertes Benzyl oder gegebenenfalls durch Chlor, Brom, Methyl, Ethyl, Methoxy oder Ethoxy substituiertes Phenyl,

$T^1$ Wasserstoff, Chlor, Methyl, Ethyl, Methoxy oder Ethoxy,

$T^2$ Wasserstoff, Chlor, Methyl, Ethyl, Methoxy, Ethoxy, $C_1$- bis $C_4$-Alkanoylamino, Benzoylamino oder $C_1$- bis $C_4$-Alkylsulfonylamino und

$K^1$ ein Rest einer Kupplungskomponente der Anilin-, Thiazol- oder Pyridinreihe sind.

4. Verwendung der Verbindungen gemäß Anspruch 1 zum Färben von natürlichen oder synthetischen Fasern.

Europäisches Patentamt

# EUROPÄISCHER RECHERCHENBERICHT

0131757

Nummer der Anmeldung

EP 84 10 6724

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 3) |
|---|---|---|---|
| A | FR-A-2 388 025 (I.C.I.)<br>* Seite 1, Formel I; Seite 2, Zeile 29; Seite 20, Beispiel 92 *<br>--- | 1,4 | C 09 B 31/02 //<br>D 06 P 1/18 |
| A | US-A-2 441 612 (ARGYLE, GIBSON)<br>* Spalten 1,2, insgesamt *<br>--- | 1,4 | |
| A | US-A-4 374 768 (FLEISCHER et al.)<br>* Spalte 1, insgesamt *<br>----- | 1,4 | |
| | | | RECHERCHIERTE SACHGEBIETE (Int. Cl. 3) |
| | | | C 09 B 31/00 |

Der vorliegende Recherchenbericht wurde für alle Patentansprüche erstellt.

| Recherchenort | Abschlußdatum der Recherche | Prüfer |
|---|---|---|
| DEN HAAG | 27-09-1984 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82